# FASCICULE DE BREVET EUROPEEN

(11) **EP 2 098 072 B1**
(45) Date de publication et mention de la délivrance du brevet: **24.10.2018**
(21) Numéro de dépôt: 07871888.9
(22) Date de dépôt: 06.12.2007
(51) Int. Cl.: H04N 7/14

(54) **DISPOSITIF POUR PERMETTRE UNE COMMUNICATION PAR VISIOCONFERENCE ET PROCEDE DE COMMUNICATION ASSOCIE**
VORRICHTUNG FÜR EINE VIDEOKONFERENZ-KOMMUNIKATION UND ENTSPRECHENDES KOMMUNIKATIONSVERFAHREN
DEVICE FOR A VIDEOCONFERENCE COMMUNICATION AND ASSOCIATED COMMUNICATION METHOD

(30) Priorité: 22.12.2006 FR 0611293
(43) Date de publication de la demande: 09.09.2009
(73) Titulaire: Orange, 75015 Paris (FR)
(72) Inventeur: GACHIGNARD, Olivier, F-92120 Montrouge (FR)
(74) Mandataire: Cabinet Plasseraud
(86) Numéro de dépôt international: PCT/FR2007/052454
(87) Numéro de publication internationale: WO 2008/081131

(56) Documents cités:
- EP-A- 1 211 869
- US-A- 5 500 671
- ROSE D A D ET AL: "A REVIEW OF EYE-TO-EYE VIDEOCONFERENCING TECHNIQUES" BT TECHNOLOGY JOURNAL, SPRINGER, DORDRECHT, NL, vol. 13, no. 4, 1 octobre 1995 (1995-10-01), pages 127-131, XP000538887 ISSN: 1358-3948

## Description

La présente invention concerne les communications par visioconférence.

La visioconférence permet à au moins deux utilisateurs de communiquer entre eux non seulement par la voix, mais aussi par la vue. Chaque utilisateur peut en effet obtenir une image de l'autre ou des autres utilisateurs impliqués dans la communication.

A cet effet, chaque utilisateur peut disposer d'un écran qui lui restitue l'image de l'autre ou des autres utilisateurs impliqués dans la communication, ainsi que d'un capteur d'image plus ou moins proche de l'écran et apte à capter sa propre image à l'attention de l'autre ou des autres utilisateurs.

Un problème de la visioconférence réside dans le fait que les utilisateurs regardent l'image de l'autre ou des autres utilisateurs sur leur écran, plutôt que leur capteur d'image. Il en résulte une impression que les différents utilisateurs ne se regardent pas "dans les yeux". Ce phénomène est parfois appelé effet "faux jeton". Il empêche une communication de qualité entre les interlocuteurs.

Il a été proposé plusieurs solutions pour résoudre ce problème.

Selon une première solution, des écrans comportant un trou pour y placer le capteur d'image ont été envisagés. Un tel trou crée cependant une rupture dans l'image affichée.

Selon une deuxième solution, une vitre semi réfléchissante est placée devant l'écran d'un utilisateur local avec un certain angle de façon à réfléchir l'image de l'utilisateur local vers un capteur d'image, tout en laissant passer l'image de l'utilisateur distant affichée sur l'écran.

Une troisième solution, décrite notamment dans FR 2 858 431, utilise un écran transflectif à commutation rapide. Un tel écran alterne avec une fréquence élevée entre un état opaque et un état transparent. Positionné de façon adéquate, le capteur d'image peut alors capter l'image d'un utilisateur local lorsque l'écran est dans son état transparent. En outre, l'écran, lorsqu'il est dans son état transparent, peut restituer à l'utilisateur local une image de son interlocuteur distant.

Malgré l'amélioration de la qualité de communication qu'elles apportent, ces différentes solutions de l'art antérieur nécessitent donc des systèmes complexes et onéreux, dont l'usage peut être adapté à des entreprises mais est inapproprié pour ce qui est du grand public.

On connaît par ailleurs dans le document US 5,500,671 un système de visioconférence permettant de corriger l'effet parallaxe qui résulte de l'écart angulaire entre la caméra et l'image observée sur l'écran. Un tel système comprend en particulier une source lumineuse projetée sur l'utilisateur local. L'image présentant le reflet de la source lumineuse projetée sur l'utilisateur local est ensuite analysée, puis corrigée, avant d'être transmise à l'utilisateur distant. L'inconvénient d'un tel système réside dans le fait qu'il nécessite un processus complexe d'analyse et de traitement de l'image.

Le document EP 1211869 décrit un dispositif mobile comprenant une caméra qui est entourée d'une pluralité de lumières LED afin d'obtenir un éclairage optimal des objets.

Un but de la présente invention est de permettre de limiter certains au moins des inconvénients susmentionnés.

L'invention propose ainsi un dispositif pour permettre une communication par visioconférence entre un utilisateur local et au moins un utilisateur distant. Ce dispositif comprend un écran apte à restituer à l'utilisateur local une image de l'utilisateur distant, un capteur d'image apte à capter une image de l'utilisateur local à l'attention de l'utilisateur distant et une source lumineuse agencée pour éclairer les yeux de l'utilisateur local regardant l'écran lors d'une communication avec l'utilisateur distant. La source lumineuse est en outre disposée par rapport au capteur d'image de façon que le capteur d'image puisse capter une image de l'utilisateur local présentant un reflet de la source lumineuse sur une partie au moins de chaque oeil de l'utilisateur local, incluant la pupille. Le dispositif comprend en outre des moyens de communication aptes à transmettre ladite image captée à l'utilisateur distant.

Un tel éclairage des yeux de l'utilisateur local à l'aide de la source lumineuse permet d'estomper les contours des pupilles et éventuellement de tout ou partie des iris et d'atténuer ainsi la perception de la directivité du regard de cet utilisateur. De ce fait, l'utilisateur distant peut obtenir une image de l'utilisateur local qui semble le regarder "dans les yeux".

Autrement dit, le dispositif susmentionné diminue la déflection du regard et assure un meilleur contact des yeux entre l'utilisateur local et l'utilisateur distant.

Ce dispositif est particulièrement simple et peut être adapté sur n'importe quel système (téléviseur, ordinateur personnel, etc.) qu'il soit utilisé par des professionnels ou par le grand public.

Selon des modes de réalisation avantageux de l'invention qui peuvent être combinés entre eux de toute manière envisageable :
- la source lumineuse est agencée pour éclairer les deux yeux de l'utilisateur local de façon sensiblement identique ;
- la source lumineuse est agencée pour ne pas éblouir l'utilisateur local ;
- la source lumineuse comprend un bloc lumineux ayant une longueur et/ou une intensité lumineuse dépendant de la taille de l'écran ;
- la source lumineuse englobe le capteur d'image ;
- l'intensité lumineuse et/ou la disposition (position, directivité du faisceau lumineux, etc.) de la source lumineuse sont choisies pour que ladite partie au moins de chaque oeil de l'utilisateur local sur laquelle la source lumineuse se reflète soit inférieure à la surface totale de l'oeil ;
- le capteur d'image comprend une optique décentrée en direction des yeux de l'utilisateur local ;
- le dispositif comprend en outre des moyens de commande de la source lumineuse, capables de tenir compte d'une position de l'utilisateur local ;
- les moyens de commande de la source lumineuse sont agencés pour adapter la disposition de la source lumineuse en fonction de la position de l'utilisateur local par rapport au capteur d'image, de façon que le capteur d'image puisse capter une image de l'utilisateur local présentant un reflet de la source lumineuse sur une partie au moins de chaque oeil de l'utilisateur local, incluant la pupille ;
- les moyens de commande de la source lumineuse sont agencés pour adapter l'intensité lumineuse de la source lumineuse en fonction de la position de l'utilisateur local par rapport au capteur d'image.

Selon d'autres modes de réalisation avantageux de l'invention :
- la source lumineuse est disposée à proximité du capteur d'image ;
- le capteur d'image est disposé à proximité de l'écran ;
- le capteur d'image est juste au-dessus ou en dessous de l'écran ;
- la source lumineuse comprend un bloc lumineux ;
- le bloc lumineux est un tube luminescent ;
- le bloc lumineux s'étend sur une partie au moins de la largeur de l'écran.

L'invention propose en outre un procédé de communication par visioconférence entre un utilisateur local et au moins un utilisateur distant, l'utilisateur local étant muni d'un dispositif comprenant un écran apte à restituer à l'utilisateur local une image de l'utilisateur distant, un capteur d'image apte à capter une image de l'utilisateur local à l'attention de l'utilisateur distant et une source lumineuse. Selon ce procédé, on éclaire les yeux de l'utilisateur local lors d'une communication avec l'utilisateur distant à l'aide de la source lumineuse dudit dispositif, de façon que le capteur d'image puisse capter une image de l'utilisateur local présentant un reflet de la source lumineuse sur une partie au moins de chaque oeil de l'utilisateur local, incluant la pupille, puis on transmet l'image ainsi captée à l'utilisateur distant à l'aide de moyens de communication.

Avantageusement, l'utilisateur distant est muni d'un autre dispositif comprenant un écran apte à restituer à l'utilisateur distant une image de l'utilisateur local, un capteur d'image apte à capter une image de l'utilisateur distant à l'attention de l'utilisateur local et une source lumineuse, ledit autre dispositif étant apte à communiquer avec le dispositif de l'utilisateur local à l'aide de moyens de communication. On éclaire les yeux de l'utilisateur distant lors de ladite communication à l'aide de la source lumineuse dudit autre dispositif, de façon que le capteur d'image dudit autre dispositif puisse capter une image de l'utilisateur distant présentant un reflet de la source lumineuse dudit autre dispositif sur une partie au moins de chaque oeil de l'utilisateur distant, incluant la pupille.

La présente invention propose également un écran, un capteur d'image et une source lumineuse pris indépendamment les uns des autres, mais aptes à être assemblés pour obtenir un dispositif tel que mentionné ci-dessus.

L'invention propose en particulier un dispositif lumineux comprenant un capteur d'image destiné à être utilisé dans un dispositif pour permettre une communication par visioconférence entre un utilisateur local et au moins un utilisateur distant, ledit capteur étant apte à capter une image de l'utilisateur local à l'attention de l'utilisateur distant, et une source lumineuse agencée pour éclairer les yeux de l'utilisateur local. La source lumineuse est disposée par rapport au capteur d'image de façon que le capteur d'image puisse capter une image de l'utilisateur local présentant un reflet de la source lumineuse sur une partie au moins de chaque oeil de l'utilisateur local, incluant la pupille, ladite image ainsi captée étant destinée à être transmise à l'utilisateur distant.

En particulier, la source lumineuse peut être adaptée, en termes de disposition (par exemple de position, de directivité du faisceau lumineux, etc.) et/ou d'intensité lumineuse notamment, en fonction de la position de l'utilisateur local.

La présente invention propose aussi un procédé d'assemblage d'un écran, d'un capteur d'image et d'une source lumineuse, pour obtenir un dispositif tel que mentionné ci-dessus.

D'autres particularités et avantages de la présente invention apparaîtront dans la description ci-après d'exemples de réalisation non limitatifs, en référence aux dessins annexés, dans lesquels :
- la figure 1 est un schéma montrant un exemple de dispositif pour permettre une communication par visioconférence selon l'invention ;
- la figure 2A est un schéma montrant certaines mesures entrant en jeu dans un exemple de dispositif selon l'invention ;
- la figure 2B est un schéma montrant un exemple de dispositif selon l'invention particulièrement adapté à réduire l'éblouissement de l'utilisateur local;
- la figure 3 est un schéma montrant un exemple de communication par visioconférence entre deux utilisateurs.

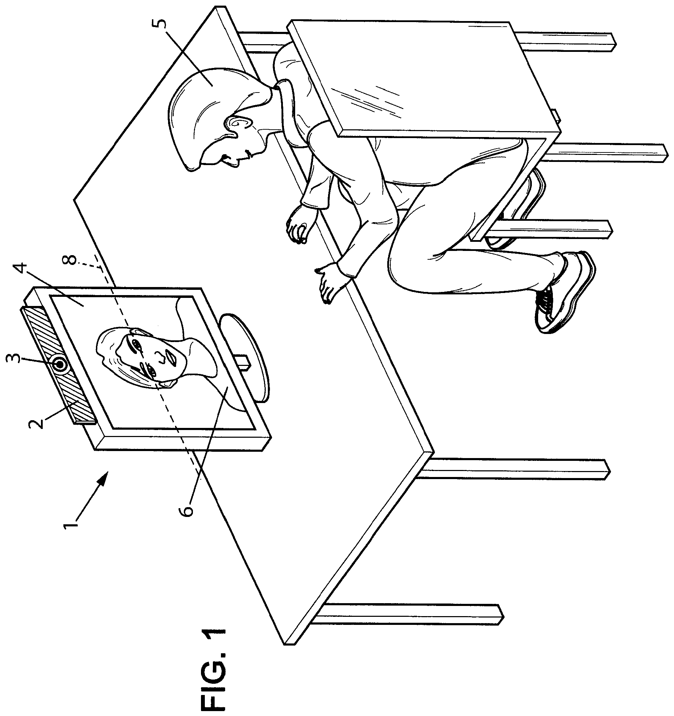

La figure 1 montre un dispositif 1 pour permettre une communication par visioconférence entre un utilisateur local 5 et un utilisateur distant 6. En variante, la communication par visioconférence pourrait avoir lieu entre l'utilisateur local 5 et plusieurs utilisateurs distants.

Le dispositif 1 comprend un écran 4 apte à restituer à l'utilisateur local 5, une image de l'utilisateur distant 6. Il comprend, en outre, un capteur d'image 3, apte à capter une image de l'utilisateur local 5 à l'attention de l'utilisateur 6.

Le capteur d'image 3 peut être par exemple une caméra ou l'objectif d'une caméra. Aussi le terme de caméra sera-t-il utilisé dans la suite de la description pour désigner le capteur d'image, sans que cela constitue une quelconque limitation. A titre d'exemple, la caméra peut consister en une Webcam.

En outre, dans le but d'atténuer "l'effet faux jeton", le dispositif 1 comprend une source lumineuse 2 qui est agencée pour éclairer les yeux de l'utilisateur local 5 lorsque celui-ci regarde l'écran 4 au cours d'une communication avec l'utilisateur distant 6, de façon que le capteur d'image 3 puisse capter une image de l'utilisateur local 5 présentant un reflet de la source lumineuse 2 sur une partie au moins de chaque oeil de l'utilisateur local 5, incluant la pupille.

Par exemple, la source lumineuse 2 peut être placée à proximité de la caméra 3.

En variante, plusieurs sources lumineuses pourraient être utilisées.

L'écran 4 du dispositif 1 peut par exemple être celui d'un téléviseur ou bien d'un ordinateur personnel. Il peut également s'agir d'une toile de vidéo projection ou de tout autre moyen apte à restituer l'image de l'utilisateur distant 6.

Selon la nature de l'écran 4, on comprendra que le dispositif 1 peut être de différentes natures. Il peut par exemple former ou faire partie d'un téléviseur, d'un ordinateur personnel, d'un système complexe de vidéo projection, etc.

La caméra 3 est de préférence disposée à proximité de l'écran 4. Par exemple, comme illustré sur la figure 1, la caméra 3 peut être placée juste au-dessus de l'écran 4 sur lequel elle repose éventuellement. En variante, la caméra 3 pourrait être placée juste en-dessous de l'écran 4. Elle est, en outre, avantageusement située sur un axe vertical médian de l'écran 4, de façon à capter une image sensiblement symétrique de l'utilisateur 5.

Selon une autre construction, la caméra 3 pourrait être placée à proximité d'un des montants verticaux de l'écran 4, si une prise de vue de biais de l'utilisateur local 5 était nécessaire.

Dans tous les cas, la caméra 3 peut être fixée à l'écran 4 de façon permanente ou détachable.

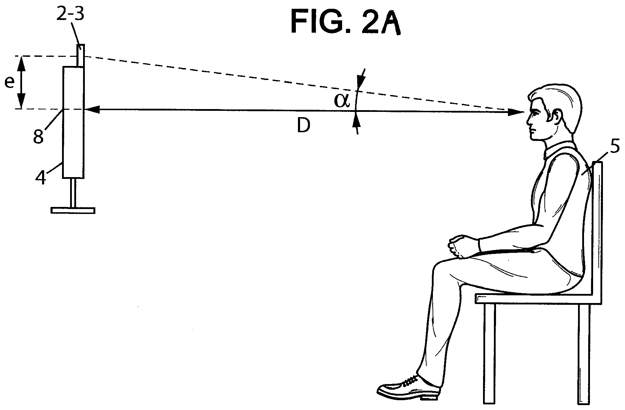

Comme on peut le voir en référence à la figure 2A, du fait de la distance e entre la caméra 3 et l'axe horizontal 8 sur lequel viennent se placer les yeux de l'utilisateur distant 6 sur l'écran 4, il existe un écart angulaire α entre la zone fixée par l'utilisateur 5 sur l'écran 4 et la position de la caméra 3. Cet angle α dépend, en outre, de la distance D entre l'utilisateur local 5 et l'écran 4. Plus la distance e est élevée, plus l'écart angulaire α est important et l'effet "faux jeton" est marqué. A l'inverse, plus la distance D est élevée, moins l'écart angulaire α est important et plus l'utilisateur distant 6 aura le sentiment que l'utilisateur local 5 le regarde "dans les yeux".

L'utilisation de la source lumineuse 2 permet, en éclairant les yeux de l'utilisateur local 5 regardant l'écran 4, de corriger l'écart angulaire α en tirant profit des propriétés de l'oeil humain. En effet, l'éclairage des yeux de l'utilisateur 5 a tendance à masquer les contours de ses pupilles et éventuellement de tout ou partie de ses iris, qui sont des éléments anatomiques qui indiquent, avec précision, la direction du regard. De cette façon, l'image captée par la caméra 3 ne pourra permettre de déterminer précisément la zone plus particulièrement regardée par l'utilisateur local 5.

Au contraire, l'éclairage des yeux de l'utilisateur local 5 à l'aide de la source lumineuse 2 est tel qu'il imprime, vu du capteur d'image 3, un reflet sur une partie au moins de chaque oeil de l'utilisateur local 5, incluant la pupille, qui laisse penser que l'utilisateur local 5 regarde ce capteur d'image 3.

La limitation de l'effet "faux jeton" ainsi obtenue est notamment importante lorsque la source lumineuse 2 est proche de la caméra 3. Ainsi, la source lumineuse 2 est disposée de part et d'autre de la caméra 3 dans l'exemple illustré sur la figure 1. En variante, la source lumineuse 2 pourrait englober totalement la caméra 3 (ou son objectif). Il peut alors par exemple s'agir d'un rectangle lumineux entourant la caméra 3. Bien sûr, il n'est cependant pas exclu que la source lumineuse 2 ne soit pas en contact direct avec la caméra 3.

La source lumineuse 2 est avantageusement agencée pour éclairer les deux yeux de l'utilisateur local 5 de façon sensiblement identique. On évite ainsi une situation où l'on capturerait une image de l'utilisateur 5, dans laquelle un seul des deux yeux de l'utilisateur 5 donnerait des informations sur la direction observée par cet utilisateur. A cet effet, la source lumineuse 2 est avantageusement située de façon sensiblement symétrique par rapport à un axe médian vertical de l'écran 4, comme c'est le cas dans l'exemple illustré sur la figure 1.

La source lumineuse 2 est avantageusement agencée pour ne pas éblouir l'utilisateur local 5, sans quoi on perdrait en qualité de communication, puisque l'utilisateur 5 ne pourrait pas voir tout à fait distinctement son interlocuteur 6 sur l'écran 4. A cet effet, la forme et/ou l'intensité lumineuse de la source lumineuse 2 peut être ajustée de manière appropriée. Ainsi, une source lumineuse sous la forme d'une bande lumineuse pourrait être préférée à une source ponctuelle plus éblouissante.

La source lumineuse 2 peut par exemple comprendre un bloc lumineux. Ce bloc lumineux peut éventuellement s'étendre sur une partie au moins de la largeur de l'écran 4, comme dans l'exemple illustré sur la figure 1. Un tel agencement présente l'intérêt de pouvoir éclairer les deux yeux de l'utilisateur 5 même si celui-ci n'est pas exactement centré par rapport au plan vertical médian de l'écran 4.

Avantageusement, le bloc lumineux a une longueur et/ou une intensité lumineuse dépendant de la taille de l'écran 4. On peut penser en effet que les grandeurs e et D, et donc l'écart angulaire α, varient selon la taille de l'écran.

A titre illustratif, le bloc lumineux peut être un tube luminescent, auquel cas sa longueur surpasse largement sa hauteur.

Avantageusement, l'intensité lumineuse et/ou la disposition (par exemple la position, la directivité du faisceau lumineux, etc.) de la source lumineuse 2 sont choisies selon certains critères prédéterminés. Ces critères peuvent comprendre le fait que la partie de chaque oeil de l'utilisateur local 5 sur laquelle la source lumineuse se reflète soit inférieure à la surface totale de l'oeil. Il peut par exemple s'agir de la pupille uniquement, ou bien de la pupille et d'une partie au moins de l'iris, mais pas du blanc de l'oeil.

La source lumineuse 2 peut même être pilotée par des moyens de commande, par exemple pour adapter sa disposition (par exemple sa position, la directivité de son faisceau lumineux, etc.) et/ou son intensité lumineuse en fonction d'une position de l'utilisateur local 5, éventuellement par rapport au capteur d'image 3. De ce fait, on peut conserver la propriété selon laquelle le capteur d'image 3 peut capter une image de l'utilisateur local 5 présentant un reflet de la source lumineuse 2 sur une partie au moins de chaque oeil de l'utilisateur local 5, incluant la pupille, même lorsque l'utilisateur local se déplace par rapport au capteur d'image 3.

De tels moyens de commande peuvent être manuels ou automatisés. La position de l'utilisateur local 5 peut être fournie aux moyens de commande directement par l'utilisateur local 5, ou bien elle peut être détectée. Une telle détection peut être faite par les moyens de commande eux-mêmes, par le capteur d'image 3, par la source lumineuse 2 et/ou par un détecteur indépendant.

Dans un exemple non limitatif particulier de réalisation de l'invention, la caméra 3 comprend une optique qui est décentrée en direction des yeux de l'utilisateur local. Autrement dit, même si l'optique de la caméra 3 a un axe principal sensiblement orthogonal au plan formé par l'écran 4, c'est-à-dire en général un axe proche de l'horizontale, la caméra a tendance à capter une image suivant un axe principal dirigé vers les yeux de l'utilisateur local 5, c'est-à-dire vers le bas dans l'exemple illustré sur la figure 1. Un tel mode de fonctionnement permet de corriger l'effet de perspective lié à la plongée ou contre-plongée du fait que la caméra 3 n'est pas située exactement en face des yeux de l'utilisateur 5.

Dans l'exemple non limitatif décrit en référence à la figure 2A, l'écran 4 est un écran de téléviseur situé à une distance D de l'utilisateur 5 égale à 2,5 mètres. Au sommet de cet écran 4 est disposé un bloc lumineux 2 englobant la caméra 3 (ou son objectif), de sorte que ce bloc 2-3 est à une distance e égale à 30 centimètres de l'axe horizontal 8 correspondant à la position des yeux de l'utilisateur local 5 sur l'écran 4.

Dans cet exemple, l'écart angulaire α corrigé, par éclairage des yeux de l'utilisateur 5 est égal à environ 6,8 degrés (= Arctan(0,3/2,5)).

Dans une telle configuration, un bloc lumineux 2 assez fin, tel qu'un tube luminescent de 15 centimètres de long environ et ayant pour intensité lumineuse de 500 cd/m², peut être approprié pour assurer la correction souhaitée sans éblouir l'utilisateur 5, lorsque ce dernier est éclairé de façon générale avec un éclairement de 1000 lux minimum à l'aide d'une source lumineuse indépendante du bloc lumineux 2.

Des tests ont montré que l'effet "faux jeton" était fortement limité voire supprimé avec les hypothèses numériques mentionnées ci-dessus.

Bien sûr, le dispositif est adaptable à d'autres types de configuration. Par exemple, certaines caractéristiques du bloc 2-3 peuvent être modifiées parce que l'écran 4 n'est plus celui d'un téléviseur, mais d'un ordinateur personnel de plus petite taille et que la distance D entre l'utilisateur 5 et l'écran 4 est en conséquence plus faible. Dans ce cas, le bloc lumineux 2 sera avantageusement plus petit et moins lumineux que dans le cas précédemment décrit.

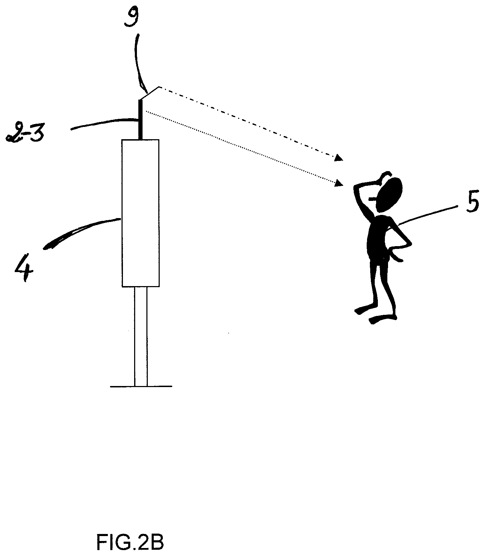

Dans un autre exemple non limitatif décrit en référence à la figure 2B, l'écran 4 est une toile de vidéo projection. Au sommet de cet écran 4 est disposé un bloc lumineux 2 englobant la caméra 3 (ou son objectif). Pour assurer une efficacité optimale, le bloc 2-3 est surmonté d'une casquette réfléchissante 9 dont l'angle par rapport au bloc 2-3 est défini par la position des yeux de l'utilisateur local 5 par rapport au bloc lumineux 2. L'utilisateur local 5 est de préférence placé à 1 mètre du bloc lumineux 2 de façon à ce que ses yeux reçoivent un éclairement qui est au minimum égal à 500 lux. Un tel éclairement ne peut excéder 800 lux, ceci afin d'éviter l'éblouissement de l'utilisateur local 5.

A la lumière de ce qui précède, on comprend que le dispositif selon l'invention comprend une association entre un écran, un capteur d'image et une source lumineuse. Ces trois éléments peuvent être associés entre eux de manière permanente, ou bien être séparables les uns des autres.

Le dispositif décrit ci-dessus peut être utilisé pour permettre à l'utilisateur local 5 de communiquer par visioconférence avec l'utilisateur distant 6. A cet effet, la source lumineuse 2 est activée pour éclairer les yeux de l'utilisateur 5 lors de sa communication avec l'utilisateur 6, de façon que le capteur d'image 3 puisse capter une image de l'utilisateur local présentant un reflet de la source lumineuse 2 sur une partie au moins de chaque oeil de l'utilisateur local 5, incluant la pupille.

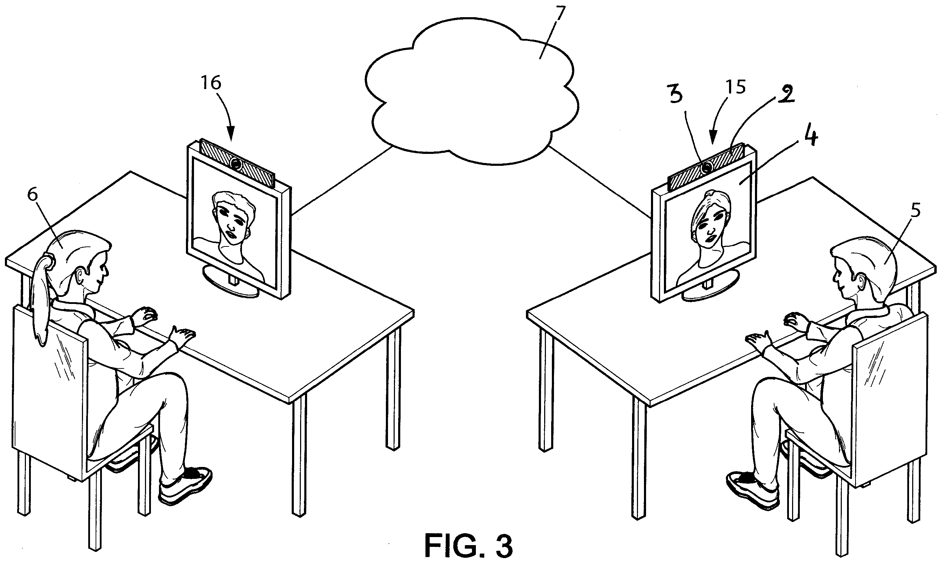

La figure 3 illustre une communication entre un utilisateur 5 et un utilisateur 6, chacun muni d'un dispositif 15 ou 16 respectivement, conforme à ce qui a été décrit plus haut.

A cet effet, des moyens de communications sont prévus pour permettre aux dispositifs 15 et 16 de communiquer entre eux, notamment pour acheminer les images des utilisateurs captées par leur caméra respective, ainsi que la voix de ces utilisateurs. Ces moyens de communications peuvent par exemple comprendre un réseau de communication 7 reliant ces dispositifs 15 et 16 ou des systèmes incorporant ces dispositifs, tels que des ordinateurs personnels des utilisateurs 5 et 6 respectivement. Ce réseau de communication 7 peut être de différents types. Il peut par exemple s'agir d'un réseau de transmission de données, tel qu'un réseau de type Internet.

## Revendications

1. Dispositif (1) pour permettre une communication par visioconférence entre un utilisateur local (5) et au moins un utilisateur distant (6), comprenant :
- un écran (4) apte à restituer à l'utilisateur local une image de l'utilisateur distant
- un capteur d'image (3) apte à capter une image de l'utilisateur local à l'attention de l'utilisateur distant,
- une source lumineuse (2) agencée pour éclairer les yeux de l'utilisateur local regardant l'écran lors d'une communication avec l'utilisateur distant, la source lumineuse étant disposée par rapport au capteur d'image de façon que le capteur d'image puisse capter une image de l'utilisateur local présentant un reflet de la source lumineuse sur une partie au moins de chaque oeil de l'utilisateur local, incluant la pupille, afin d'estomper les contours des pupilles et d'atténuer la perception de la directivité du regard de l'utilisateur local,
et des moyens de communication (7) aptes à transmettre ladite image captée à l'utilisateur distant (6).
**caractérisé en ce que** le dispositif comprend en outre des moyens de commande de la source lumineuse (2), capables de tenir compte d'une position de l'utilisateur local.
dans lequel les moyens de commande de la source lumineuse sont agencés pour adapter la disposition de la source lumineuse (2) en fonction de la position de l'utilisateur local par rapport au capteur d'image (3), de façon que le capteur d'image puisse capter une image de l'utilisateur local présentant un reflet de la source lumineuse sur une partie au moins de chaque oeil de l'utilisateur local, incluant la pupille.

2. Dispositif (1) selon la revendication 1, dans lequel la source lumineuse (2) est agencée pour éclairer les deux yeux de l'utilisateur local (5) de façon sensiblement identique.

3. Dispositif (1) selon la revendication 1 ou 2, dans lequel la source lumineuse (2) est agencée pour ne pas éblouir l'utilisateur local (5).

4. Dispositif (1) selon l'une quelconque des revendications précédentes, dans lequel la source lumineuse (2) comprend un bloc lumineux ayant une longueur et/ou une intensité lumineuse dépendant de la taille de l'écran (4).

5. Dispositif (1) selon l'une quelconque des revendications précédentes, dans lequel la source lumineuse (2) englobe le capteur d'image (3).

6. Dispositif (1) selon l'une quelconque des revendications précédentes, dans lequel l'intensité lumineuse et/ou la disposition de la source lumineuse (2) sont choisies pour que ladite partie au moins de chaque oeil de l'utilisateur local (5) sur laquelle la source lumineuse se reflète soit inférieure à la surface totale de l'oeil.

7. Dispositif (1) selon l'une quelconque des revendications précédentes, dans lequel le capteur d'image (3) comprend une optique décentrée en direction des yeux de l'utilisateur local (5).

8. Dispositif (1) selon la revendication 1, dans lequel les moyens de commande de la source lumineuse sont agencés pour adapter l'intensité lumineuse de la source lumineuse (2) en fonction de la position de l'utilisateur local par rapport au capteur d'image (3).

9. Procédé de communication par visioconférence entre un utilisateur local (5) et au moins un utilisateur distant (6), l'utilisateur local étant muni d'un dispositif (1 ;15) comprenant un écran (4) apte à restituer à l'utilisateur local une image de l'utilisateur distant, un capteur d'image (3) apte à capter une image de l'utilisateur local à l'attention de l'utilisateur distant et une source lumineuse (2), dans lequel :
- on éclaire les yeux de l'utilisateur local lors d'une communication avec l'utilisateur distant à l'aide de la source lumineuse dudit dispositif, de façon que le capteur d'image puisse capter une image de l'utilisateur local présentant un reflet de la source lumineuse sur une partie au moins de chaque oeil de l'utilisateur local, incluant la pupille, afin d'estomper les contours des pupilles et d'atténuer ainsi la perception de la directivité du regard de l'utilisateur local, puis
- on transmet ladite image ainsi captée à l'utilisateur distant à l'aide de moyen de communication (7)
**caractérisé en ce que** le procédé comprend en outre une commande de la source lumineuse (2) pour tenir compte d'une position de l'utilisateur local.
ladite commande permettant d'adapter la disposition de la source lumineuse (2) en fonction de la position de l'utilisateur local par rapport au capteur d'image (3), de façon que le capteur d'image puisse capter une image de l'utilisateur local présentant un reflet de la source lumineuse sur une partie au moins de chaque oeil de l'utilisateur local, incluant la pupille.

## Patentansprüche

1. Vorrichtung (1), um eine Videokonferenz-Kommunikation zwischen einem lokalen Benutzer (5) und mindestens einem entfernten Benutzer (6) zu ermöglichen, umfassend:
- einen Bildschirm (4), der geeignet ist, einem lokalen Benutzer ein Bild des entfernten Benutzers wiederzugeben,
- einen Bildsensor (3), der geeignet ist, ein Bild des lokalen Benutzers zu Handen des entfernten Benutzers zu erfassen,
- eine Lichtquelle (2), die dazu vorgesehen ist, die Augen des lokalen Benutzers zu beleuchten, der auf den Bildschirm bei einer Kommunikation mit dem entfernten Benutzer schaut,
wobei die Lichtquelle in Bezug zum Bildsensor derart angeordnet ist, dass der Bildsensor ein Bild des lokalen Benutzers erfassen kann, das eine Reflexion der Lichtquelle auf mindestens einem Teil jedes Auges des lokalen Benutzers, einschließlich der Pupille, darstellt, um die Konturen der Pupillen zu verwischen und die Wahrnehmung der Richtcharakteristik des Blickes des lokalen Benutzers zu dämpfen,
- und Kommunikationsmittel (7), die geeignet sind, das erfasste Bild an einen entfernten Benutzer (6) zu übertragen,
**dadurch gekennzeichnet, dass** die Vorrichtung ferner Mittel zur Steuerung der Lichtquelle (2) umfasst, die geeignet sind, eine Position des lokalen Benutzers zu berücksichtigen,
wobei die Steuermittel der Lichtquelle dazu vorgesehen sind, die Anordnung der Lichtquelle (2) in Abhängigkeit von der Position des lokalen Benutzers in Bezug zum Bildsensor (3) anzupassen, damit der Bildsensor ein Bild des lokalen Benutzers erfassen kann, das eine Reflexion der Lichtquelle auf mindestens einem Teil jedes Auges des lokalen Benutzers, einschließlich der Pupille, darstellt.

2. Vorrichtung (1) nach Anspruch 1, bei der die Lichtquelle (2) dazu vorgesehen ist, die zwei Augen des lokalen Benutzers (5) auf im Wesentlichen identische Weise zu beleuchten.

3. Vorrichtung (1) nach Anspruch 1 oder 2, bei der die Lichtquelle (2) dazu vorgesehen ist, den lokalen Benutzer (5) nicht zu blenden.

4. Vorrichtung (1) nach einem der vorhergehenden Ansprüche, bei der die Lichtquelle (2) einen Leuchtblock mit einer Länge und/oder Lichtstärke, die von der Größe des Bildschirms (4) abhängen, umfasst.

5. Vorrichtung (1) nach einem der vorhergehenden Ansprüche, bei der die Lichtquelle (2) den Bildsensor (3) einschließt.

6. Vorrichtung (1) nach einem der vorhergehenden Ansprüche, bei der die Lichtstärke und/oder die Anordnung der Lichtquelle (2) derart gewählt sind, dass mindestens der Teil jedes Auges des lokalen Benutzers (5), auf dem sich die Lichtquelle reflektiert, kleiner als die Gesamtfläche des Auges ist.

7. Vorrichtung (1) nach einem der vorhergehenden Ansprüche, bei der der Bildsensor (3) eine dezentrierte Optik in Richtung der Augen des lokalen Benutzers (5) umfasst.

8. Vorrichtung (1) nach Anspruch 1, bei der die Steuermittel der Lichtquelle dazu vorgesehen sind, die Lichtstärke der Lichtquelle (2) in Abhängigkeit von der Position des lokalen Benutzers in Bezug zum Bildsensor (3) anzupassen.

9. Kommunikationsverfahren für eine Videokonferenz zwischen einem lokalen Benutzer (5) und mindestens einem entfernten Benutzer (6), wobei der lokale Benutzer mit einer Vorrichtung (1; 15) versehen ist, umfassend einen Bildschirm (4), der geeignet ist, einem lokalen Benutzer ein Bild des entfernten Benutzers wiederzugeben, einen Bildsensor (3), der geeignet ist, ein Bild des lokalen Benutzers zu Handen des entfernten Benutzers zu erfassen, und eine Lichtquelle (2), wobei:
- die Augen des lokalen Benutzers bei einer Kommunikation mit dem entfernten Benutzer mit Hilfe der Lichtquelle der Vorrichtung beleuchtet werden, so dass der Bildsensor ein Bild des lokalen Benutzers erfassen kann, das eine Reflexion der Lichtquelle auf mindestens einem Teil jedes Auges des lokalen Benutzers, einschließlich der Pupille, darstellt, um die Konturen der Pupillen zu verwischen und so die Wahrnehmung der Richtcharakteristik des Blickes des lokalen Benutzers zu dämpfen, dann
- das so erfasste Bild an den entfernten Benutzer mit Hilfe eines Kommunikationsmittels (7) übertragen wird,
**dadurch gekennzeichnet, dass** das Verfahren ferner eine Steuerung der Lichtquelle (2) umfasst, um eine Position des lokalen Benutzers zu berücksichtigen,
wobei es die Steuerung ermöglicht, die Anordnung der Lichtquelle (2) in Abhängigkeit von der Position des lokalen Benutzers in Bezug zum Bildsensor (3) anzupassen, so dass der Bildsensor ein Bild des lokalen Benutzers erfassen kann, das eine Reflexion der Lichtquelle auf mindestens einem Teil jedes Auges des lokalen Benutzers, einschließlich der Pupille, darstellt.

## Claims

1. Device (1) for enabling a communication via videotelephony between a local user (5) and at least one remote user (6), comprising:
- a screen (4) that is capable of rendering an image of the remote user for the local user;
- an image sensor (3) that is capable of capturing an image of the local user for the remote user;
- a light source (2) that is arranged so as to illuminate the eyes of the local user looking at the screen during a communication with the remote user,
the light source being positioned with respect to the image sensor such that the image sensor is able to capture an image of the local user exhibiting a reflection of the light source on a portion at least of each eye of the local user, including the pupil, so as to blur the outlines of the pupils and attenuate the perception of the directivity of the gaze of the local user,
and communication means (7) that are capable of transmitting said captured image to the remote user (6),
**characterized in that** the device further comprises means for controlling the light source (2), which means are capable of taking into account a position of the local user,
wherein the means for controlling the light source are arranged so as to adjust the positioning of the light source (2) according to the position of the local user with respect to the image sensor (3), such that the image sensor is able to capture an image of the local user exhibiting a reflection of the light source on a portion at least of each eye of the local user, including the pupil.

2. Device (1) according to Claim 1, wherein the light source (2) is arranged so as to illuminate both eyes of the local user (5) in a substantially identical manner.

3. Device (1) according to Claim 1 or 2, wherein the light source (2) is arranged so as not to dazzle the local user (5).

4. Device (1) according to any one of the preceding claims, wherein the light source (2) comprises a light block, the length and/or a luminous intensity of which depend/depends on the size of the screen (4).

5. Device (1) according to any one of the preceding claims, wherein the light source (2) includes the image sensor (3).

6. Device (1) according to any one of the preceding claims, wherein the luminous intensity and/or the positioning of the light source (2) are chosen so that said portion at least of each eye of the local user (5) on which the light source is reflected is smaller than the total area of the eye.

7. Device (1) according to any one of the preceding claims, wherein the image sensor (3) comprises an optic that is decentred in the direction of the eyes of the local user (5).

8. Device (1) according to Claim 1, wherein the means for controlling the light source are arranged so as to adjust the luminous intensity of the light source (2) according to the position of the local user with respect to the image sensor (3).

9. Method for communication via videotelephony between a local user (5) and at least one remote user (6), the local user being provided with a device (1; 15) comprising a screen (4) that is capable of rendering an image of the remote user for the local user, an image sensor (3) that is capable of capturing an image of the local user for the remote user and a light source (2), wherein:
- the eyes of the local user are illuminated during a communication with the remote user using the light source of said device, such that the image sensor is able to capture an image of the local user exhibiting a reflection of the light source on a portion at least of each eye of the local user, including the pupil, so as to blur the outlines of the pupils and thus attenuate the perception of the directivity of the gaze of the local user; then
- said image thus captured is transmitted to the remote user using communication means (7),
**characterized in that** the method further comprises controlling the light source (2) so as to take into account a position of the local user,
said control allowing the positioning of the light source (2) to be adjusted according to the position of the local user with respect to the image sensor (3), such that the image sensor is able to capture an image of the local user exhibiting a reflection of the light source on a portion at least of each eye of the local user, including the pupil.
